# EUROPEAN PATENT SPECIFICATION

(11) **EP 3 471 465 B1**
(45) Date of publication and mention of the grant of the patent: **28.10.2020**
(21) Application number: 17196694.8
(22) Date of filing: 16.10.2017
(51) Int. Cl.: H04W 48/18

(54) **METHOD OF AND DEVICE FOR DETERMINING A COMMUNICATION NETWORK FOR PROVIDING A COMMUNICATION SERVICE TO A TERMINAL COMMUNICATION DEVICE**
VERFAHREN UND VORRICHTUNGEN ZUR BESTIMMUNG EINES KOMMUNIKATIONSNETZWERKS ZUR BEREITSTELLUNG EINES KOMMUNIKATIONSDIENSTES AN EINE ENDGERÄTEKOMMUNIKATIONSVORRICHTUNG
PROCÉDÉS ET DISPOSITIFS DE DÉTERMINATION D'UN RÉSEAU DE COMMUNICATION PERMETTANT DE FOURNIR UN SERVICE DE COMMUNICATION À UN DISPOSITIF TERMINAL DE COMMUNICATION

(43) Date of publication of application: 17.04.2019
(73) Proprietor: NTT DOCOMO, INC., Chiyoda-ku Tokyo 100-6150 (JP)
(72) Inventor: MUTIKAINEN, Jari, 80687 Munich (DE); GUERZONI, Riccardo, 80687 Munich (DE)
(74) Representative: Viering, Jentschura & Partner mbB Patent- und Rechtsanwälte

(56) References cited:
- EP-A1- 2 533 556
- WO-A1-2016/165758
- "3rd Generation Partnership Project; Technical Specification Group Core Network and Terminals; 5G System - Phase 1; CT WG4 Aspects (Release 15)", 3GPP DRAFT; 29891-040, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 6 October 2017 (2017-10-06), XP051348080, Retrieved from the Internet: URL:http://www.3gpp.org/ftp/Meetings_3GPP_ SYNC/SA3/Docs/ [retrieved on 2017-10-06]

## Description

Various embodiments are generally related to methods and devices of determining a communication network for providing a communication service to a terminal communication device.

Mobility management is a key function of mobile networks which allows mobile networks to track the subscribers allowing calls, Short Messaging Service (SMS), mobile Internet and other mobile phone services to be delivered to the mobile users.

Given that mobility management plays such a key role in mobile networks, both the Long-Term Evolution (LTE) highspeed wireless communication for mobile devices and the fifth generation wireless network systems (5GS) have an approach to the problem. In LTE mobility management is by and large performed by the so called Mobility Management Entity (MME), while in 5G mobility management is accomplished by the so called Access and Mobility Management Function (AMF).

Since mobile phones and other terminal devices (such as User Equipments, UEs) may be connected to a plurality of radio communication network including LTE radio communication network and 5G radio communication network at the same time, there is the necessity to synchronize the respective MMEs and AMFs. To address this problem, the Third Generation Partnership Project (3GPP) defined the interface N26 in the standard TS 23.501 to synchronize the MME of a LTE network with the AMF of a 5G network.

Document WO 2016/165758 A1 describes a solution for determining which Radio Access Technology (RAT) should be used to route a terminating voice session directed towards a user equipment (UE) for the case where the UE is connected to the IP multimedia subsystem (IMS) via a WLAN.

Document 3GPP TR 29.891 V 0. 4.0 describes the Terminating Access Domain Selection (T-ADS) procedure in a IMS network employing 5G and other technologies.

The invention is defined by the subject matter of the independent claims. Preferred embodiments are set out in the dependent claims.

In various embodiments, a method of determining a communication network for providing a communication service to a terminal communication device is provided. The method may include sending, to a network determination entity, a request message to determine a communication network that has a connectivity session with the terminal device, the request message including a unique identifier identifying the terminal device; receiving an indication message from the network determination entity including an indication of at least one communication network out of a plurality of communication networks in which the terminal device has a connectivity session; and selecting the indicated communication network for initiating the communication service in case the indicated communication network supports the communication service.

Various exemplary embodiments are described below.

A method of determining a communication network for providing a communication service to a terminal communication device. The method, which may be performed by a combination of a home subscriber server and of a unified data management, may include sending, to a network determination entity, a request message to determine a communication network that has a connectivity session with the terminal device, the request message including a unique identifier identifying the terminal device, receiving an indication message from the network determination entity including an indication of a communication network out of a plurality of communication networks in which the terminal device has a connectivity session, and selecting the indicated communication network for initiating the communication service in case the indicated communication network supports the communication service; wherein at least one communication network of the plurality of communication networks is configured in accordance with a Long Term Evolution radio communication technology and at least one other communication network of the plurality of communication networks is configured in accordance with a 5G radio communication technology; wherein the network determination entity includes a combination of a packet data network gateway-core network entity and of a session management function entity. The method mentioned in this paragraph provides a first example.

By way of example, the method may be performed in a mobile communication core network. The method mentioned in this paragraph in combination with the first example provides a second example.

By way of example, the method may further include receiving a service request message to initiate a communication service for the terminal device, and generating the request message upon the receipt of the service request message. The method mentioned in this paragraph in combination with the first or second example provides a third example.

By way of example, the method optionally includes that the service request message is received from an internet multimedia subsystem entity. The method mentioned in this paragraph in combination with the third example provides a fourth example.

By way of example, the method may further include sending a service initiating message to the selected communication network to initiate the communication service for the terminal device. The method mentioned in this paragraph in combination with any one of the first to fourth examples provides a fifth example.

By way of example, the method may further include that the unique identifier identifying the terminal device is the internet protocol address of the terminal device. The method mentioned in this paragraph in combination with any one of the first to fifth examples provides a sixth example.

By way of example, the method may further include that the communication service includes a voice over internet protocol communication service. The method mentioned in this paragraph in combination with any one of the first to sixth examples provides a seventh example.

A method of determining a communication network for providing a communication service to a terminal communication device. The method, which may be performed by a combination of a home subscriber server and of a unified data management, may include receiving a request message to determine a communication network that has a connectivity session with the terminal device, the request message including a unique identifier identifying the terminal device, determining a communication network out of a plurality of communication networks in which the terminal device has a connectivity session using the received unique identifier, and sending an indication message including an indication of the determined a communication network in which the terminal device has a connectivity session for selection for the communication service; wherein at least one communication network of the plurality of communication networks may be configured in accordance with a Long Term Evolution radio communication technology and at least one other communication network of the plurality of communication networks may be configured in accordance with a 5G radio communication technology; wherein the network determination entity includes a combination of a packet data network gateway-core network entity and of a session management function entity. The method mentioned in this paragraph provides an eighth example.

By way of example, the method may further include determining a communication network by sending a first determination request message to a core network entity of a first communication network out of the plurality of communication networks requesting whether the terminal device has a connectivity session in the first communication network, the first determination request message including the unique identifier of the terminal device, and sending a second determination request message to a core network entity of a second communication network out of the plurality of communication networks requesting whether the terminal device has a connectivity session in the second communication network, the second determination request message including the unique identifier of the terminal device. The method mentioned in this paragraph in combination with the eighth example provides a ninth example.

By way of example, the method may further include that determining a communication network includes: receiving a first determination response message from the core network entity of the first communication network indicating whether the terminal device has a connectivity session in the first communication network, and receiving a second determination response message from the core network entity of second communication network indicating whether the terminal device has a connectivity session in the second communication network. The method mentioned in this paragraph in combination with the ninth example provides a tenth example.

By way of example, the method may be performed in a mobile communication core network. The method mentioned in this paragraph in combination with any one of the eighth to tenth examples provides an eleventh example.

By way of example, the method may further include that the connectivity session is an internet multimedia subsystem packet data network connection. The method mentioned in this paragraph in combination with any one of the eighth to eleventh examples provides a twelfth example.

By way of example, the method may further include that the unique identifier identifying the terminal device is the internet protocol address of the terminal device. The method mentioned in this paragraph in combination with any one of the eighth to twelfth examples provides a thirteenth example.

By way of example, the method may further include that the communication service includes a voice over internet protocol communication service. The method mentioned in this paragraph in combination with any one of the eighth to thirteenth examples provides a fourteenth example.

A device for determining a communication network for providing a communication service to a terminal communication device. The device, being a combination of a home subscriber server and of a unified data management, may include a transmitter configured to send, to a network determination entity, a request message to determine a communication network that has a connectivity session with the terminal device, the request message including a unique identifier identifying the terminal device, a receiver configured to receive an indication message from the network determination entity including an indication of a communication network out of a plurality of communication networks in which the terminal device has a connectivity session, and a processor configured to select the indicated communication network for initiating the communication service in case the indicated communication network supports the communication service; wherein at least one communication network of the plurality of communication networks is configured in accordance with a Long Term Evolution radio communication technology and at least one other communication network of the plurality of communication networks is configured in accordance with a 5G radio communication technology; wherein the network determination entity comprises a combination of a packet data network and of a gateway-core network entity and of a session management function entity. The device mentioned in this paragraph provides a fifteenth example.

By way of example, the device may be configured as a component of a mobile communication core network. The device mentioned in this paragraph in combination with the fifteenth example provides a sixteenth example.

By way of example, the device can optionally include that the receiver is further configured to receive a service request message to initiate a communication service for the terminal device, and that the processor may be further configured to generate the request message upon the receipt of the service request message. The device mentioned in this paragraph in combination with the fifteenth or sixteenth example provides a seventeenth example.

By way of example, the device can optionally include that the service request message is received from an internet multimedia subsystem entity. The device mentioned in this paragraph in combination with the seventeenth example provides an eighteenth example.

By way of example, the device can optionally include that the transmitter may be further configured to send a service initiating message to the selected communication network to initiate the communication service for the terminal device. The device mentioned in this paragraph in combination with any one of the fifteenth to eighteenth examples provides a nineteenth example.

By way of example, the device can optionally include that the unique identifier identifying the terminal device is the internet protocol address of the terminal device. The device mentioned in this paragraph in combination with any one of the fifteenth to nineteenth examples provides a twentieth example.

By way of example, the device can optionally include that the communication service includes a voice over internet protocol communication service. The device mentioned in this paragraph in combination with any one of the fifteenth to twentieth examples provides a twenty-first example.

A device for determining a communication network for providing a communication service to a terminal communication device. The device, being a combination of a home subscriber server and of a unified data management, may include a receiver configured to receive a request message to determine a communication network that has a connectivity session with the terminal device, the request message including a unique identifier identifying the terminal device, a processor configured to determine a communication network out of a plurality of communication networks in which the terminal device has a connectivity session using the received unique identifier, and a transmitter configured to send an indication message including an indication of the determined a communication network in which the terminal device has a connectivity session for selection for the communication service; wherein at least one communication network of the plurality of communication networks is configured in accordance with a Long Term Evolution radio communication technology and at least one other communication network of the plurality of communication networks is configured in accordance with a 5G radio communication technology; wherein the network determination entity comprises a combination of a packet data network and of a gateway-core network entity and of a session management function entity. The device mentioned in this paragraph provides a twenty-second example.

By way of example, the device can optionally include that the transmitter is further configured to send a first determination request message to a core network entity of a first communication network out of the plurality of communication networks requesting whether the terminal device has a connectivity session in the first communication network, the first determination request message including the unique identifier of the terminal device, and that the transmitter is further configured to send a second determination request message to a core network entity of a second communication network out of the plurality of communication networks requesting whether the terminal device has a connectivity session in the second communication network, the second determination request message including the unique identifier of the terminal device. The device mentioned in this paragraph in combination with twenty-second example provides a twenty-third example.

By way of example, the device can optionally include that the receiver is further configured to receive a first determination response message from the core network entity of the first communication network indicating whether the terminal device has a connectivity session in the first communication network, and that the receiver is further configured to receive a second determination response message from the core network entity of second communication network indicating whether the terminal device has a connectivity session in the second communication network. The device mentioned in this paragraph in combination with the twenty-third example provides a twenty-fourth example.

By way of example, the device can optionally be configured as a component of a mobile communication core network. The device mentioned in this paragraph in combination with any one of the twenty-second to twenty-fourth examples provides a twenty-fifth example.

By way of example, the device can optionally include that the connectivity session is an internet multimedia subsystem packet data network connection. The device mentioned in this paragraph in combination with any one of the twenty-second to twenty-fifth examples provides a twenty-sixth example.

By way of example, the device can optionally include that the unique identifier identifying the terminal device is the internet protocol address of the terminal device. The device mentioned in this paragraph in combination with any one of the twenty-second to twenty-sixth examples provides a twenty-seventh example.

By way of example, the device can optionally include that the communication service includes a voice over internet protocol communication service. The device mentioned in this paragraph in combination with any one of the twenty-second to twenty-seventh examples provides a twenty-eighth example.

Throughout the drawings, it should be noted that like reference numbers are used to depict the same or similar elements, features, and structures. The drawings are not necessarily to scale, emphasis instead generally being placed upon illustrating aspects of the disclosure. In the following description, some aspects of the disclosure are described with reference to the following drawings, in which:
- Figure 1: shows an embodiment of a mobile radio communication network;
- Figure 2: shows an embodiment of a mobile radio communication network;
- Figure 3: shows a message sequence to start an "IMS voice over PS" call;
- Figure 4: shows an embodiment of a mobile radio communication network;
- Figure 5: shows a message sequence to start an "IMS voice over PS" call;
- Figure 6: shows a message sequence to start an "IMS voice over PS" call;
- Figure 7: shows an implementation of a terminal device in accordance with various embodiments;
- Figure 8: shows an implementation of a PGW-C+SMF entity in accordance with various embodiments;
- Figure 9: shows an implementation of a HSS+UDM entity in accordance with various embodiments;
- Figure 10: shows a flow diagram illustrating a method of determining a communication network for providing a communication service to a terminal communication device in accordance with various embodiments; and
- Figure 11: shows a flow diagram illustrating a method of determining a communication network for providing a communication service to a terminal communication device in accordance with various embodiments.

The following detailed description refers to the accompanying drawings that show, by way of illustration, specific details and embodiments in which the disclosure may be practiced.

The word "exemplary" is used herein to mean "serving as an example, instance, or illustration". Any embodiment or design described herein as "exemplary" is not necessarily to be construed as preferred or advantageous over other embodiments or designs.

Other aspects may be utilized and structural, logical, and electrical changes may be made without departing from the scope of the disclosure. The various aspects of this disclosure are not necessarily mutually exclusive, as some aspects of this disclosure can be combined with one or more other aspects of this disclosure to form new aspects.

Mobility management is a key function of mobile networks which allows mobile networks to track the subscribers allowing calls, Short Messaging Service (SMS), mobile Internet and other mobile phone services to be delivered to the mobile users.

Given that mobility management plays such a key role in mobile networks, both the Long-Term Evolution (LTE) highspeed wireless communication for mobile devices and the fifth generation wireless network systems (5GS) have an approach to the problem. In LTE mobility management is by and large performed by the so called Mobility Management Entity (MME), while in 5G mobility management is accomplished by the so called Access and Mobility Management Function (AMF).

Since mobile phones and other terminal devices (such as User Equipments, UEs) may be connected to a plurality of radio communication network including LTE radio communication network and 5G radio communication network at the same time, there is the necessity to synchronize the respective MMEs and AMFs. To address this problem, the Third Generation Partnership Project (3GPP) defined the interface N26 in the standard TS 23.501 to synchronize the MME of a LTE network with the AMF of a 5G network.

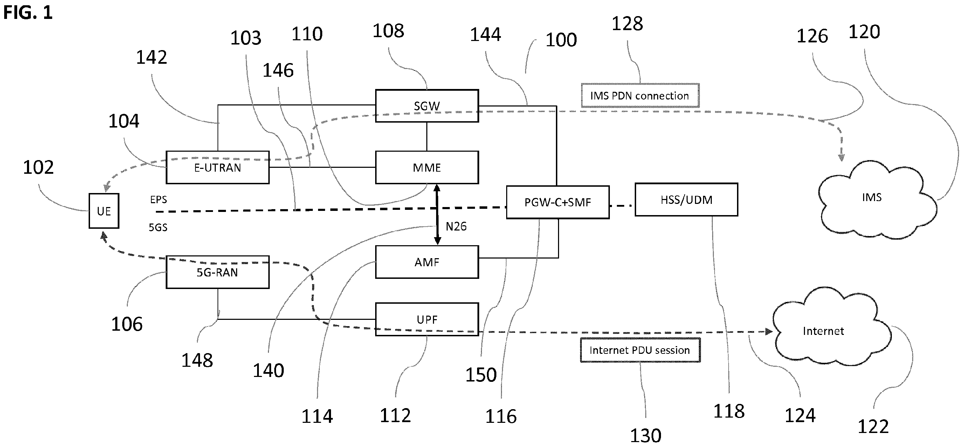

FIG. 1 shows an embodiment of a mobile radio communication network 100 that may include both an LTE radio communication network and a 5GS radio communication network. In FIG. 1 the dotted line 103 denotes an imaginary separation between the two systems and it is introduced only for explanatory reasons. All components above line 103 are exemplary components of the LTE system, all components below line 103 are exemplary components of the 5GS system and all components that are aligned with line 103 are exemplary components that may be provided in both systems.

The components that may be shared across the two systems may include a terminal device (UE) 102 which may be a User Equipment such as a mobile phone of a mobile customer, but it may also be another type of device including a mobile network connection module of connected autos, a mobile connection module for robots, or a mobile network connection module of sensors monitoring some values in a specific environment, or a controller for smart homes, smart building, or smart spaces. A network determination entity (PGW-C+SMF) 116 which may include a combination of the Packet Data Network Gateway (PGW) and the Session Management Function (SMF) and it may be configured to provide network determination services in both the LTE and 5GS. A network component (HSS/UDM) 118 which may be a combination of a Home Subscriber Server (HSS) and of the Unified Data Management (UDM) and it may be configured to act in both radio communication (core) networks. Finally, it may also include one or a plurality of Internet Protocol Multimedia Subsystems (IMS) 120.

The LTE components may also include an Evolved Universal Terrestrial Radio Access (E_UTRAN) 104, a Serving Gateway (SGW) 108 and a Mobility Management Entity (MME) 110.

The 5GS components may also include the Fifth Generation Radio Access Network (5G-RAN) 106 a User Plane Function (UPF) 112 and a Core Access and Mobility Management Function (AMF) 114.

In FIG. 1 the connector 140 labeled N26 represents the interface between the LTE MME and the 5GS AMF as defined in the standard 3GPP TS 23.501.

FIG. 1 further shows other connectors such as a connector 142 connecting the E-UTRAN 104 to the SGW 108, a connector 144 connecting the PGW-C+SMF 116 to the SGW 108, a connector 146 connecting E-UTRAN 104 to the MME 110, a connector 148 connecting the 5G-RAN to the UPF, a connector 150 connecting the PGW-C+SMF 116 to the AMF 114.

In addition, FIG.1 shows two connectivity sessions (which may also be referred to as communication connection or as communication session). A first connectivity session is an Internet Protocol Multimedia Subsystems Packet Data Network Connection (IMS PDN Connection) 128 connecting the UE 102 to the IMS 120. The dotted line 126 is exemplary of the network components that the IMS PDN Connection 128 may involve. A second connectivity session is an Internet Packet Data Unit Session (Internet PDU session) 130 that connects the UE 102 to the Internet 122 through 5GS components. The dotted line 124 schematically shows the components that may be involved in the Internet PDU session 124.

In radio communication networks in which the interface N26 is not present, there is a definite possibility of lack of synchronization between the radio communication networks and specifically between LTE and 5GS leading to problems such as services failures.

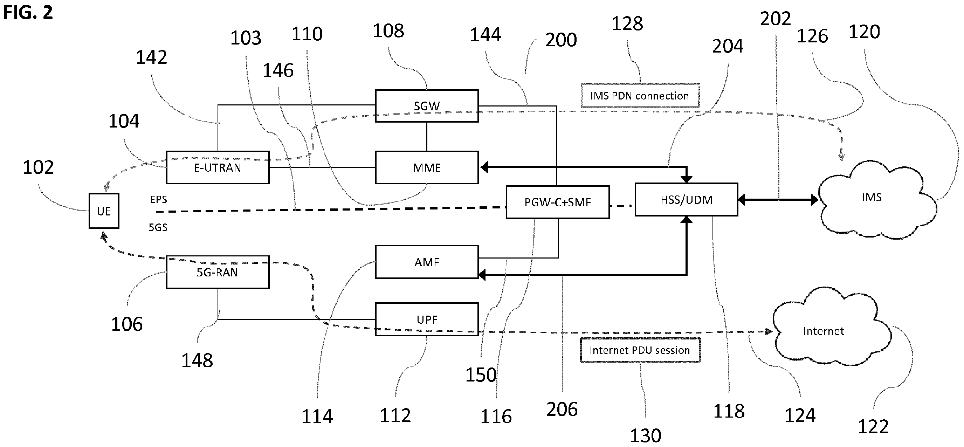

FIG. 2 shows an embodiment of a mobile radio communication network 200 that may include both an LTE radio communication network and a 5GS radio communication network, but where the interface N26 is not present.

In such mobile radio communication network, when the IMS 120 attempts to start an "IMS voice over PS" call to the UE 102, the IMS follows the 3GPP standard TS 23.501 "Terminating domain selection for IMS voice".

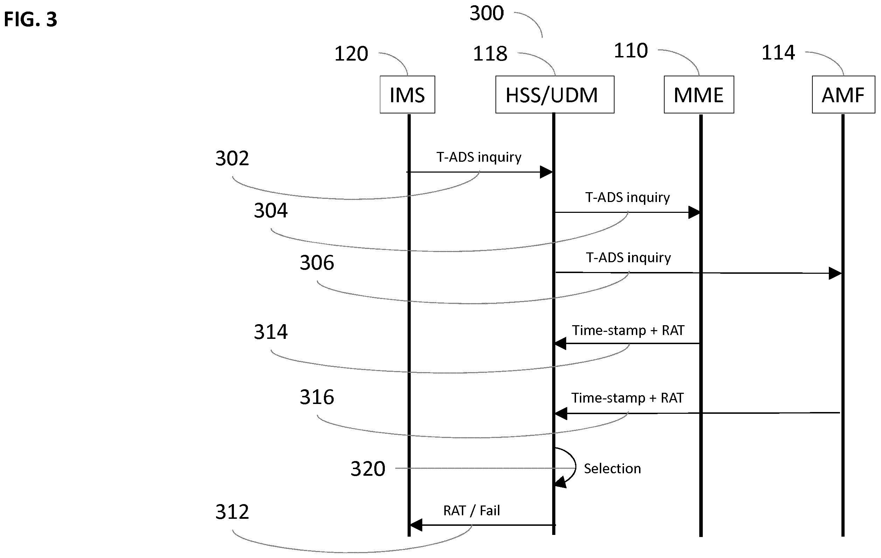

FIG. 3 shows how a message sequence 300 to start an "IMS voice over PS" call to the UE 102 may run in a mobile radio communication network like the mobile radio communication network 200 following the 3GPP standard TS 23.501 "Terminating domain selection for IMS voice".

In 302, the IMS 120 issues a Terminating Access Domain Selection (T-ADS) inquiry to the HSS/UDM 118, which may be defined in agreement with the interface Sh defined in the 3GPP standard TS 29.328, through the connector 202, asking for support for the "IMS voice over PS" call in the currently registered radio access.

In 304, upon receiving the T-ADS inquiry, the HSS/UDM 118 issues a T-ADS inquiry to the MME 110 through the connector 204 and in 306 the HSS/UDM 118 issues a T-ADS inquiry to the AMF 114 through the connector 206.

The T-ADS inquiries 304 and 306 may be performed concurrently.

The AMF 114 and the MME 110 independently and without synchronization report the support based on the current registration area of the UE 102. Such reports may include a time stamp of last radio contact and the type of Radio Access Technology (RAT). The MME 110 report to the component HSS/UDM 118 is transmitted in 314, while the AMF 114 report to the component HSS/UDM 118 is transmitted in 316.

Since the UE 102 has an active connection IMS PDN connection 128 exemplified by the dotted line 126 on the LTE side, the MME 110 will report information about connection 128. Furthermore, since the UE 102 has an active Internet PDU session 130 exemplified by the dotted line 124, the AMF 114 will report information about the Internet PDU session 130.

In 320, the component HSS/UDM 118 selects the RAT to report to the IMS 120.

If the time stamp in the MME 110 report transmitted in 314 shows a time after the time represented by the time stamp in the AMF 114 report transmitted in 316, the UE 102 had its most recent radio contact with the IMS PDN connection 128 which supports "IMS voice over PS", the component HSS/UDM 118 reports the found RAT to the IMS 120 so that it can continue the call process.

If instead the time stamp in the MME 110 report transmitted in 314 shows a time before the time represented by the time stamp in the AMF 114 report transmitted in 316, the UE 102 had its most recent radio contact with the Internet PDU session 130 which does not support "IMS voice over PS", the T-ADS reports would then wrongly report that UE 102 is not under a RAT supporting "IMS voice over PS" leading to a failure of the call even though the call would be possible on the existing IMS PDN connection 128.

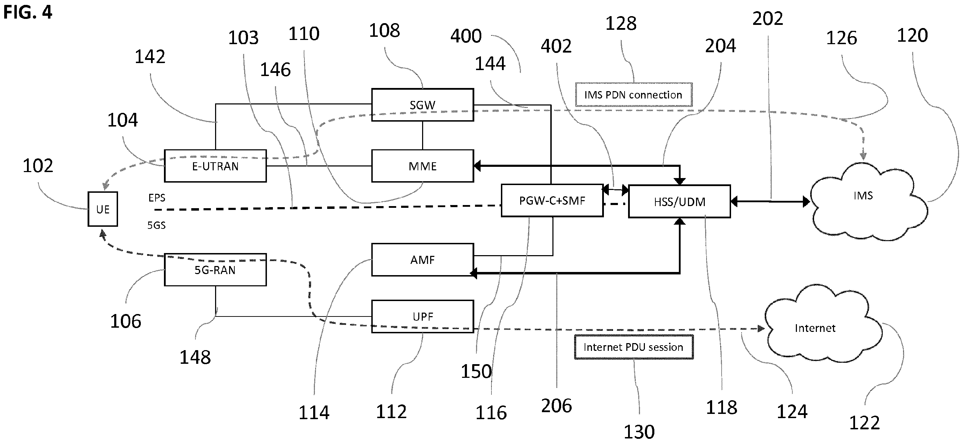

FIG. 4 shows how the synchronization problem as described above could be addressed through a network determination entity in a mobile radio communication network 400.

In FIG. 4, the connector 402 implements an interface N10: Location query for IMS PDU session defined in the 3GPP standard TS 23.502. Through this interface N10, the HSS/UDM 118 can locate on which communication network resides the IMS connectivity session. In some embodiments, in which the UE 102 is connected to a plurality of IMS sessions, the PGW-C+SMF 116may perform a match using the IP address of the IMS session in order to select just one of the plurality of IMS sessions.

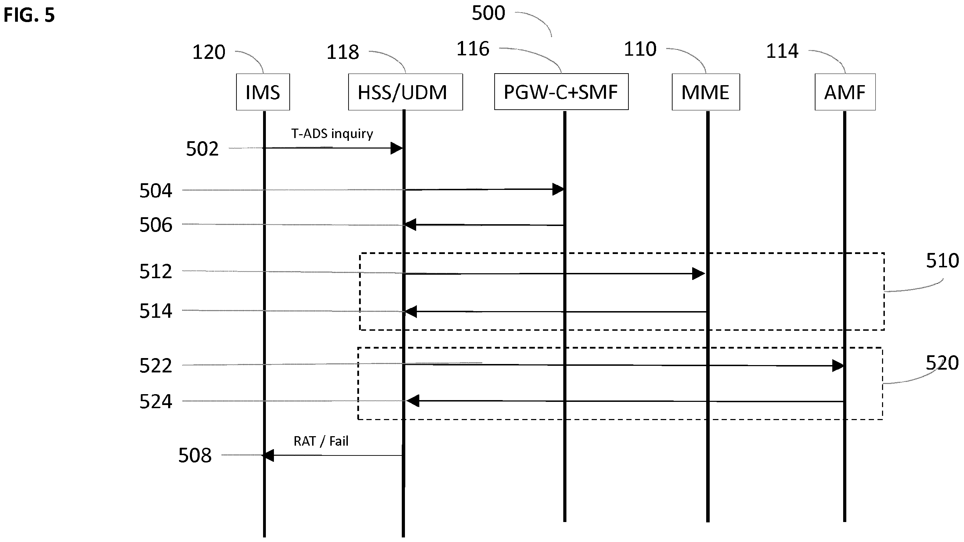

FIG. 5 shows how a message sequence 500 to start an "IMS voice over PS" call to the UE 102 may run in a mobile radio communication network like mobile radio communication network 400 by exploiting the interface N10 on the connector 402.

In 502, the IMS 120 issues a T-ADS inquiry to the HSS/UDM 118, which may be defined in agreement with the interface Sh defined in the 3GPP standard TS 29.328, through the connector 202, asking for support for the "IMS voice over PS" call in the currently registered radio access. In some embodiments of this connection, the IMS 120 may also provide the Internet Protocol address of the IMS communication service of the UE 102.

In 504 the component HSS/UDM 118 queries the PGW-C+SMF 116, e.g. by querying its local binding table (e.g. UE subscription profile stored in HSS/UDM as defined e.g. in the 3GPP TS 23.401 document) between SMF ID and DNN.

In 506 the PGW-C+SMF 116 responds with the current system of the IMS PDU session/PDN connection. Such reply may include a message, which may include a value "five G core" (5GC) indicating the 5G communication network as the current communication network providing the IMS PDU session/PDN connection or a value "evolved packet core" (EPC) indicating the LTE communication network as the current communication network providing the IMS PDU session/PDN connection. If the response indicates 5GS, UDM 118 executes the T-ADS query with AMF 114.

If the response in 506 indicates EPC, the HSS/UDM 118 may perform a protocol 510 where the HSS/UDM 118 issues a T-ADS inquiry 512 to the MME 110 receiving a reply message 514 which may contain the IMS voice support, RAT and a time stamp indicating the most recent radio contact with the UE.

If instead the response message in 506 indicates 5GC, the component HSS/UDM 118 may perform the protocol 520 where the component HSS/UDM 118 issues a T-ADS inquiry 522 to the AMF 114 receiving a reply message 524 which specifies IMS voice support, RAT and a time stamp indicating the most recent radio contact with the UE.

Process 504 may be performed when a plurality of IMS PDN connections or a plurality of IMS PDU session have been found. In this case, the HSS/UDM 118 may request the PGW-C+SMF 116 to select the IMS PDN connection or IMS PDU session related to IMS 120 out of a plurality of IMS PDN connection or a plurality of IMS PDU sessions.

The PGW-C+SMF 116 may perform a match of the IP address of the IMS communication service with the IP address of the IMS components in the plurality of IMS PDN connection or a plurality of IMS PDU sessions for the UE.

The matching IMS PDN connection or IMS PDU session related to IMS 120, when found, is returned in 506. When it is not found a failure signal is returned in 506.

In 508, the IMS voice support in the most recent RAT through which the IMS PDU session or PDN connection of the UE is connected to the IMS 120 are reported or a failure signal is reported in case such RAT was not found.

Given the communication 508, the IMS 120 has the information of which radio communication network to perform the "IMS voice over PS" call. If no such radio communication network exists, the IMS 120 has the information that the call is not possible.

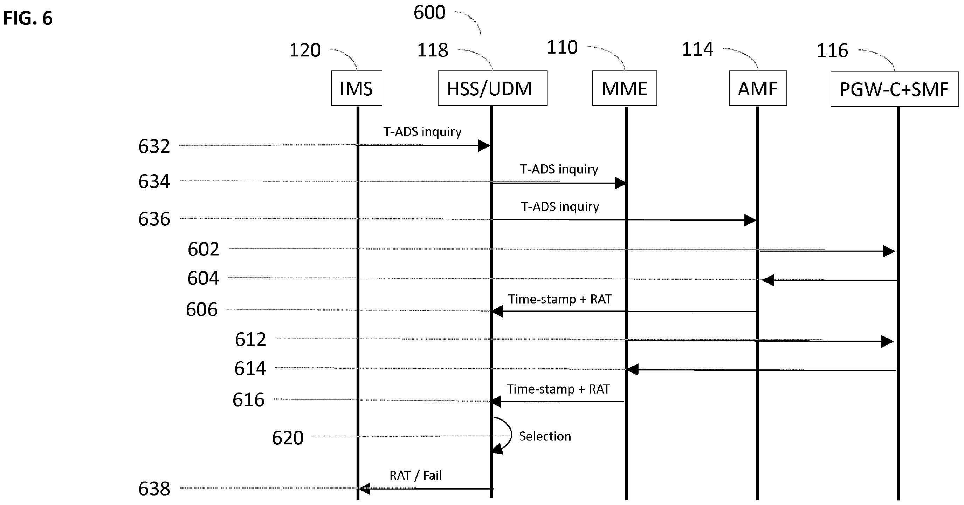

FIG. 6 shows a message sequence 600 to start an "IMS voice over PS" call to the UE 102 performed in the mobile radio communication network 400 where the interface N26 has not been enabled. The sequence 600 is a variation of the message sequence 300 which in contrast to the sequence 300 as shown in FIG. 3 avoids the synchronization problems described above. Furthermore, message sequence 600 is an alternative to message sequence 500 as shown in FIG. 5 that does not make use of the connector 402.

In 632, the IMS 120 issues T-ADS inquiry to the HSS/UDM 118, which may be defined in agreement with the interface Sh defined in the 3GPP standard TS 29.328, through the connector 202, asking for support for the "IMS voice over PS" call in the currently registered radio access. In some embodiments of this connection, the IMS 120 may also provide the Internet Protocol address of the communication service of the UE 102.

Upon receiving the T-ADS inquiry 632 from the IMS 120, HSS/UDM 118 issues a T-ADS inquiry 634 to the MME 110 and a T-ADS inquiry 636 to the AMF 114.

Upon receiving the T-ADS inquiry from HSS/UDM 118, the AMF 114 looks up the binding of the PGW-C+SMF 116 and DNN for "IMS" DNN.

In 602, upon having found the bindings, the AMF 114 sends an inquiry to the corresponding PGW-C+SMF 116.

In some embodiments the network 200 may contain multiple embodiments of the PGW-C+SMF 116 in which case the AMF 114 may send the inquiry to all of them.

Upon receiving the communication 602, the PGW-C+SMF 116 may retrieve one or a plurality of "active" IMS PDU sessions.

For each IMS PDU session: If the IMS PDU session/PDN connection is currently using 5GC, the SMF/PGW-C may respond with a message including an indication of the current RAT of the IMS PDU session. Examples or the current RAT may include 5G-New Radio (5G-NR) or E-UTRA. In addition, the SMF/PGW-C 116 may include a time stamp indicating when the PDU session was moved to this RAT/system. SMF/PGW-C includes the IP address of the PDU session to the response message. Otherwise, the SMF/PGW-C may respond with a message including a "not here" indication.

When the component PGW-C+SMF 116 does not find any IMS PDU session/PDN connection, it will reply with a message including a "not here" indication in the reply message 604.

Upon receiving the reply message 604, the AMF 114 determines if the response message indicates the current system for IMS PDU session is 5GC. In addition, the AMF may respond to T-ADS inquiry 636 with a message 606 by indicating whether the connections supports the function "IMS voice over PS" issuing a "support" or "non-support" signal, as described in the 3GPP standard TS 23.501. The time stamp issued in the message transmitted in 604 may also be included in the response message 606. The IP address of the PDU session may also be included in the response message 606.

If the response from the component PGW-C+SMF 116 indicates "not here", AMF 114 may set the "IMS voice over PS" to 'non-support' in the response message 606 to HSS/UDM 118, indicating that the "IMS voice over PS" may not be executed on any RAT known to the AMF 114.

Upon receiving the T-ADS inquiry from HSS/UDM 118, the MME 110 looks up the binding of the PGW-C+SMF 116 and DNN for "IMS" DNN.

In 612, upon having found the bindings, the MME 110 sends an inquiry message to the corresponding PGW-C+SMF 116.

In some embodiments, the mobile radio communication network 200 may contain multiple embodiments of the PGW-C+SMF 116, in which case the AMF 114 may send the inquiry message to all of them.

Upon receiving the connection, the PGW-C+SMF 116 may retrieve one or a plurality of IMS PDN connections.

For each IMS PDN connection: if the IMS PDU session/PDN connection is currently using LTE, the SMF/PGW-C responds with a message including the current RAT of the IMS PDU session. Examples or the current RAT may include 5G-NR or EUTRA. In addition, the SMF/PGW-C 116 may include a time stamp indicating when the PDN connection was moved to this RAT/system. SMF/PGW-C 116 includes the IP address of the PDU session to the response. Otherwise the SMF/PGW-C 116 responds with "not here" indication.

In some embodiments, the component PGW-C+SMF 116 may not find any RAT for the IMS 120, so it will reply with a "not here" indication in the reply 614.

Upon receiving the reply 614, the MME 110 determines if the response indicates the current system for IMS PDU session is 5GC. In addition, the MME 110 may respond to T-ADS inquiry 306 with a message 616 by indicating whether the connections supports the function "IMS voice over PS" issuing a "support" or "non-support" signal, as described in the 3GPP standard TS 23.501. The time stamp issued in 614 may also be included in the response message 606. The IP address of the PDU session may also be included in the response message 606.

If the response message from the component PGW-C+SMF 116 indicates "not here", MME 110 may set the "IMS voice over PS" to 'non-support' in the response message 616 to HSS/UDM 118.

In some embodiments, the MME 110 may not inquire the PGW-C+SMF 116 but store the current RAT and time stamp for IMS PDN connection locally, i.e. in the MME 110 itself.

In 620, the component HSS/UDM 118 may compare the IP addresses in the response with the IP address in the IMS 120 registration and selects the correct response based on that.

In some embodiments of 620 the component HSS/UDM 118 may also involve the PGW-C+SMF 116 in the selection.

In 620, when the response message 616 from the MME 110 indicates 'non-support' the component HSS/UDM 118 may respond with a fail message in 638.

Given the communication in 638, the IMS 120 has the information of which radio communication network to perform the "IMS voice over PS" call. If no such radio communication network exists, the IMS 120 has the information that the call is not possible.

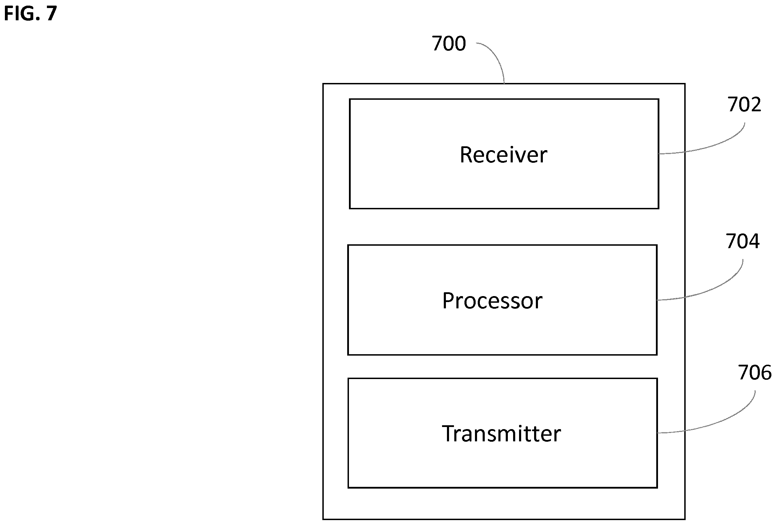

FIG. 7 shows a UE 102 which may include a receiver 702 configured to receive communications from LTE radio communications network and from 5GS radio communications network.

The UE 102 may further include a processor 704 coupled to the receiver 702 and configured to execute the functions required by radio communications networks such as LTE and 5GS. The processor 704 may also be configured to perform the functions required to establish an "IMS voice over PS" communication, e.g. as described above.

The UE 102 may further include a transmitter 706 coupled to the processor 704 configured to transmit communications from LTE radio communications network and from 5GS radio communications networks.

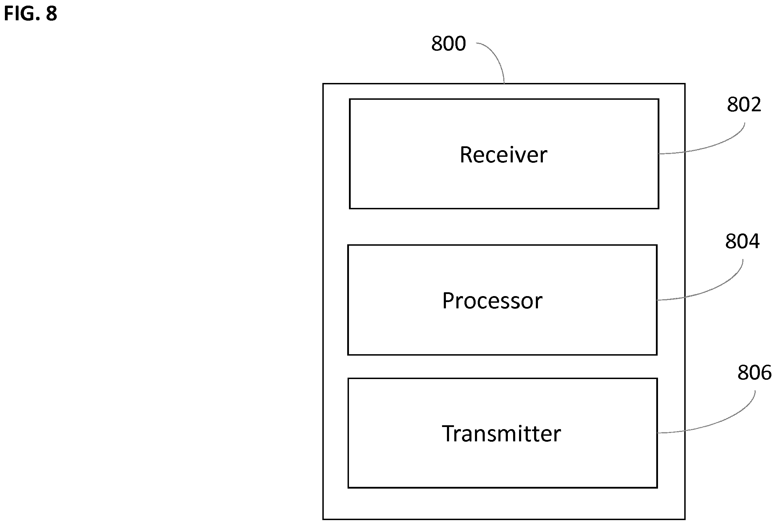

FIG. 8 shows an implementation of a PGW-C+SMF entity 800, which may include a receiver 802 configured to receive communications from LTE radio communications network and from 5GS radio communications network.

The PGW-C+SMF entity 800 may further include a processor 804 coupled to the receiver 802 and configured to perform at least the PGW-C function of the LTE radio communication network, and the SMF function of the 5GS radio communication network.

The PGW-C+SMF entity 800 may further include a transmitter 806 coupled to the processor 804 and configured to transmit communications from LTE radio communications network and from 5GS radio communications networks.

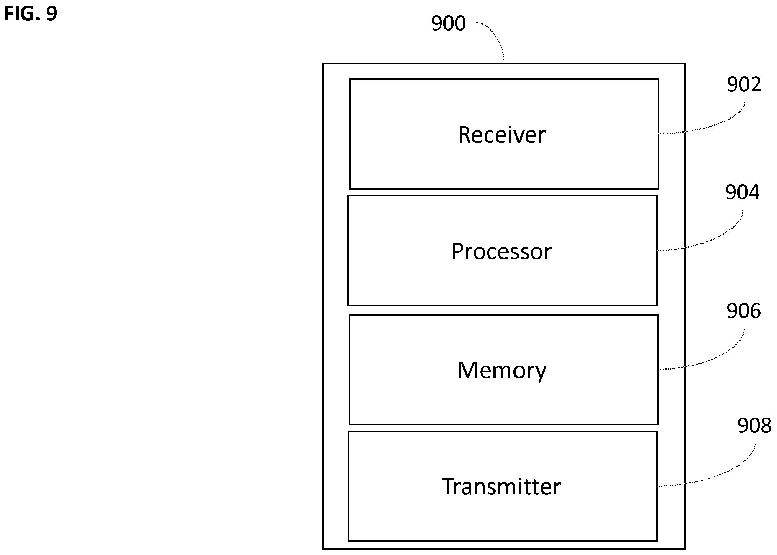

FIG. 9 shows an implementation of a HSS+UDM entity 900 which may include a receiver 902 configured to receive communications from LTE radio communications network and from 5GS radio communications network.

The HSS+UDM entity 900 may further include a processor 904 coupled to the receiver 902 and configured to perform at least the HSS and UDM functions of the LTE radio communication network, and of the 5GS radio communication network. These functions may include communicate with the PGW-C+SMF 116, the MME 110 and the AMF 114 to retrieve information about active communications sessions in which the UE 102 is active.

The HSS+UDM entity 900 may further include a memory 906 coupled to the processor 904 and configured to store information about UEs 102.

The HSS+UDM entity 900 may further include a transmitter 908 coupled to the processor 904 and configured to transmit communications from LTE radio communications network and from 5GS radio communications networks.

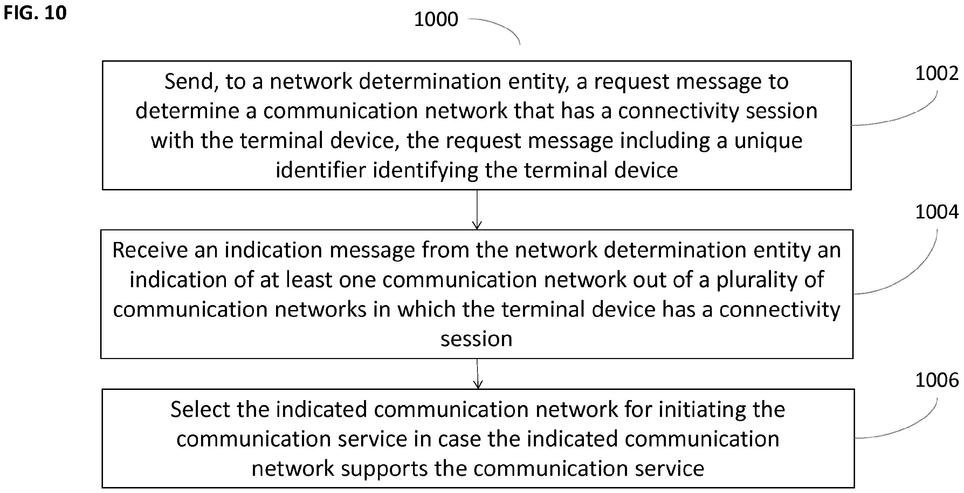

FIG 10 shows a flow diagram 1000 illustrating a method of determining a communication network for providing a communication service to a terminal communication device.

The method may include, in 1002, sending, to a network determination entity, a request message to determine a communication network that has a connectivity session with the terminal device, the request message including a unique identifier identifying the terminal device, in 1004, receiving an indication message from the network determination entity including an indication of at least one communication network out of a plurality of communication networks in which the terminal device has a connectivity session, and in 1006, selecting the indicated communication network for initiating the communication service in case the indicated communication network supports the communication service.

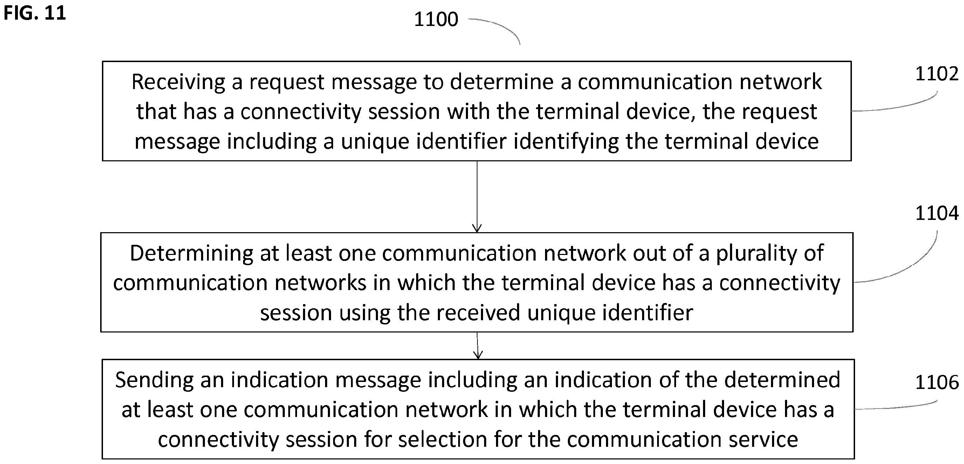

FIG. 11 shows a flow diagram 1100 illustrating a method of determining a communication network for providing a communication service to a terminal communication device in accordance with various embodiments.

The method may include, in 1102, receiving a request message to determine a communication network that has a connectivity session with the terminal device, the request message including a unique identifier identifying the terminal device, in 1104, determining at least one communication network out of a plurality of communication networks in which the terminal device has a connectivity session using the received unique identifier, and in 1106, sending an indication message including an indication of the determined at least one communication network in which the terminal device has a connectivity session for selection for the communication service.

## Claims

1. A method of determining a communication network for providing a communication service to a terminal communication device, the method being performed by a combination of a home subscriber server and of a unified data management and comprising:
sending (1002), to a network determination entity, a request message to determine a communication network that has a connectivity session with the terminal device, the request message comprising a unique identifier identifying the terminal device;
receiving (1004) an indication message from the network determination entity including an indication of a communication network out of a plurality of communication networks in which the terminal device has a connectivity session; and
selecting (1006) the indicated communication network for initiating the communication service in case the indicated communication network supports the communication service;
wherein at least one communication network of the plurality of communication networks is configured in accordance with a Long Term Evolution radio communication technology and at least one other communication network of the plurality of communication networks is configured in accordance with a 5G radio communication technology;
wherein the network determination entity comprises a combination of a packet data network gateway-core network entity and of a session management function entity.

2. The method of claim 1,
performed in a mobile communication core network.

3. The method of any one of claims 1 to 2, further comprising:
receiving a service request message to initiate a communication service for the terminal device; and
generating the request message upon the receipt of the service request message.

4. The method of claim 3,
wherein the service request message is received from an internet multimedia subsystem entity.

5. The method of any one of claims 1 to 4, further comprising:
sending an service initiating message to the selected communication network to initiate the communication service for the terminal device.

6. The method of any one of claims 1 to 5, wherein the unique identifier identifying the terminal device is the internet protocol address of the terminal device.

7. A device (118, 900) for determining a communication network for providing a communication service to a terminal communication device, the device (118, 900) being a combination of a home subscriber server and of a unified data management and comprising:
a transmitter (908) configured to send, to a network determination entity (116, 800), a request message to determine a communication network that has a connectivity session with the terminal device, the request message comprising a unique identifier identifying the terminal device;
a receiver (902) configured to receive an indication message from the network determination entity including an indication of a communication network out of a plurality of communication networks in which the terminal device has a connectivity session; and
a processor (904) configured to select the indicated communication network for initiating the communication service in case the indicated communication network supports the communication service;
wherein at least one communication network of the plurality of communication networks is configured in accordance with a Long Term Evolution radio communication technology and at least one other communication network of the plurality of communication networks is configured in accordance with a 5G radio communication technology;
wherein the network determination entity (116, 800) comprises a combination of a packet data network gateway-core network entity and of a session management function entity.

8. The device of claim 7, configured as a component of a mobile communication core network.

9. The device of any one of claims 7 or 8, wherein the receiver is further configured to receive a service request message to initiate a communication service for the terminal device; and
wherein the processor is further configured to generate the request message upon the receipt of the service request message.

10. The device of any one of claims 7 to 9, wherein the transmitter is further configured to send a service initiating message to the selected communication network to initiate the communication service for the terminal device.

## Patentansprüche

1. Verfahren zum Bestimmen eines Kommunikationsnetzwerks zum Bereitstellen eines Kommunikationsdienstes für ein Kommunikationsendgerät, wobei das Verfahren von einer Kombination eines Heimteilnehmerservers und einer vereinheitlichten Datenverwaltung durchgeführt wird und aufweist:
Senden (1002) einer Anforderungsnachricht an eine Netzwerkbestimmungseinheit, ein Kommunikationsnetzwerk zu bestimmen, das eine Konnektivitätssitzung mit dem Endgerät hat, wobei die Anforderungsnachricht eine eindeutige Kennung aufweist, der das Endgerät identifiziert;
Empfangen (1004) einer Angabenachricht von der Netzwerkbestimmungseinheit, die eine Angabe von mindestens einem Kommunikationsnetzwerk aus einer Mehrzahl von Kommunikationsnetzwerken enthält, in dem das Endgerät eine Konnektivitätssitzung hat; und
Auswählen (1006) des angegebenen Kommunikationsnetzwerkes zur Initiierung des Kommunikationsdienstes, falls das angegebene Kommunikationsnetzwerk den Kommunikationsdienst unterstützt;
wobei mindestens ein Kommunikationsnetzwerk der Mehrzahl von Kommunikationsnetzwerken gemäß einer Long Term Evolution-Funkkommunikationstechnologie eingerichtet ist und mindestens ein anderes Kommunikationsnetzwerk der Mehrzahl von Kommunikationsnetzwerken gemäß einer 5G-Funkkommunikationstechnologie eingerichtet ist;
wobei die Netzwerkbestimmungseinheit eine Kombination einer Paketdatennetzwerk-Gateway-Kernnetzwerkeinheit und einer Sitzungsverwaltungsfunktionseinheit aufweist.

2. Das Verfahren nach Anspruch 1,
in einem Mobilkommunikationskernnetzwerk durchgeführt.

3. Das Verfahren nach einem der Ansprüche 1 bis 2, ferner aufweisend:
Empfangen einer Dienstanforderungsnachricht, einen Kommunikationsdienst für das Endgerät zu initiieren; und
Erzeugen der Anforderungsnachricht bei Empfang der Dienstanforderungsnachricht.

4. Das Verfahren nach Anspruch 3,
wobei die Dienstanforderungsnachricht von einer Internet-Multimedia-Subsystem-Einheit empfangen wird.

5. Das Verfahren eines der Ansprüche 1 bis 4, das ferner aufweist:
Senden einer Dienstinitiierungsnachricht an das ausgewählte Kommunikationsnetzwerk, um den Kommunikationsdienst für das Endgerät zu initiieren.

6. Das Verfahren nach einem der Ansprüche 1 bis 5,
wobei die eindeutige Kennung, die das Endgerät identifiziert, die Internetprotokolladresse des Endgerätes ist.

7. Vorrichtung (118, 900) zur Bestimmung eines Kommunikationsnetzwerkes zur Bereitstellung eines Kommunikationsdienstes für ein Kommunikationsendgerät, wobei die Vorrichtung (118, 900) eine Kombination eines Heimteilnehmerservers und einer vereinheitlichten Datenverwaltung ist und aufweist:
einen Sender (908), der so eingerichtet ist, dass er an eine Netzwerkbestimmungseinheit (116, 800) eine Anforderungsnachricht sendet, ein Kommunikationsnetzwerk zu bestimmen, das eine Konnektivitätssitzung mit dem Endgerät hat, wobei die Anforderungsnachricht eine eindeutige Kennung aufweist, die das Endgerät identifiziert;
einen Empfänger (902), der so eingerichtet ist, dass er eine Angabenachricht von der Netzwerkbestimmungseinheit empfängt, die eine Angabe von einem Kommunikationsnetzwerk aus einer Mehrzahl von Kommunikationsnetzwerken enthält, in denen das Endgerät eine Konnektivitätssitzung hat; und
einen Prozessor (904), der so eingerichtet ist, dass er das angegebene Kommunikationsnetzwerk für die Initiierung des Kommunikationsdienstes auswählt, falls das angegebene Kommunikationsnetzwerk den Kommunikationsdienst unterstützt;
wobei mindestens ein Kommunikationsnetzwerk der Mehrzahl von Kommunikationsnetzwerken gemäß einer Long Term Evolution-Funkkommunikationstechnologie eingerichtet ist und mindestens ein anderes Kommunikationsnetzwerk der Mehrzahl von Kommunikationsnetzwerken gemäß einer 5G-Funkkommunikationstechnologie eingerichtet ist;
wobei die Netzwerkbestimmungseinheit (116, 800) eine Kombination einer Paketdatennetzwerk-Gateway-Kernnetzwerkeinheit und einer Sitzungsverwaltungsfunktionseinheit aufweist.

8. Die Vorrichtung nach Anspruch 7,
eingerichtet als Komponente eines Mobilkommunikationskernnetzwerkes.

9. Die Vorrichtung nach einem der Ansprüche 7 oder 8,
wobei der Empfänger ferner so eingerichtet ist, dass er eine Dienstanforderungsnachricht empfängt, einen Kommunikationsdienst für das Endgerät zu initiieren; und
wobei der Prozessor ferner so eingerichtet ist, dass er die Anforderungsnachricht nach dem Empfang der Dienstanforderungsnachricht erzeugt.

10. Die Vorrichtung nach einem der Ansprüche 7 bis 9,
wobei der Sender ferner eingerichtet ist, eine Dienstinitiierungsnachricht an das ausgewählte Kommunikationsnetzwerk zu senden, um den Kommunikationsdienst für das Endgerät zu initiieren.

## Revendications

1. Procédé de détermination d'un réseau de communication pour fournir un service de communication à un dispositif de communication terminal, le procédé étant mis en œuvre par une combinaison d'un serveur d'abonné domestique et d'une gestion de données unifiée, et comprenant les étapes ci-dessous consistant à :
envoyer (1002), à une entité de détermination de réseau, un message de demande pour déterminer un réseau de communication qui présente une session de connectivité avec le dispositif terminal, le message de demande comprenant un identificateur unique identifiant le dispositif terminal ;
recevoir (1004) un message d'indication en provenance de l'entité de détermination de réseau, incluant une indication d'un réseau de communication parmi une pluralité de réseaux de communication dans lesquels le dispositif terminal présente une session de connectivité ; et
sélectionner (1006) le réseau de communication indiqué pour initier le service de communication dans le cas où le réseau de communication indiqué prend en charge le service de communication ;
dans lequel au moins un réseau de communication de la pluralité de réseaux de communication est configuré conformément à une technologie de radiocommunication d'évolution à long terme, LTE, et au moins un autre réseau de communication de la pluralité de réseaux de communication est configuré conformément à une technologie de radiocommunication 5G ;
dans lequel l'entité de détermination de réseau comprend une combinaison d'une entité de réseau central/passerelle de réseau de données en paquets et d'une entité de fonction de gestion de session.

2. Procédé selon la revendication 1, lequel est mis en œuvre dans un réseau central de communication mobile.

3. Procédé selon l'une quelconque des revendications 1 à 2, comprenant en outre les étapes ci-dessous consistant à :
recevoir un message de demande de service pour initier un service de communication pour le dispositif terminal ; et
générer le message de demande suite à la réception du message de demande de service.

4. Procédé selon la revendication 3,
dans lequel le message de demande de service est reçu en provenance d'une entité de sous-système multimédia de protocole Internet.

5. Procédé selon l'une quelconque des revendications 1 à 4, comprenant en outre l'étape ci-dessous consistant à :
envoyer un message d'initiation de service au réseau de communication sélectionné en vue d'initier le service de communication pour le dispositif terminal.

6. Procédé selon l'une quelconque des revendications 1 à 5,
dans lequel l'identificateur unique identifiant le dispositif terminal est l'adresse de protocole internet du dispositif terminal.

7. Dispositif (118, 900) destiné à déterminer un réseau de communication pour fournir un service de communication à un dispositif de communication terminal, le dispositif (118, 900) étant une combinaison d'un serveur d'abonné domestique et d'une gestion de données unifiée et comprenant :
un émetteur (908) configuré de manière à envoyer, à une entité de détermination de réseau (116, 800), un message de demande pour déterminer un réseau de communication qui présente une session de connectivité avec le dispositif terminal, le message de demande comprenant un identificateur unique identifiant le dispositif terminal ;
un récepteur (902) configuré de manière à recevoir un message d'indication, en provenance de l'entité de détermination de réseau, incluant une indication d'un réseau de communication parmi une pluralité de réseaux de communication dans lesquels le dispositif terminal présente une session de connectivité ; et
un processeur (904) configuré de manière à sélectionner le réseau de communication indiqué pour initier le service de communication dans le cas où le réseau de communication indiqué prend en charge le service de communication ;
dans lequel au moins un réseau de communication de la pluralité de réseaux de communication est configuré conformément à une technologie de radiocommunication d'évolution à long terme, LTE, et au moins un autre réseau de communication de la pluralité de réseaux de communication est configuré conformément à une technologie de radiocommunication 5G ;
dans lequel l'entité de détermination de réseau (116, 800) comprend une combinaison d'une entité de réseau central/passerelle de réseau de données en paquets et d'une entité de fonction de gestion de session.

8. Dispositif selon la revendication 7, configuré en tant qu'un composant d'un réseau central de communication mobile.

9. Dispositif selon l'une quelconque des revendications 7 et 8, dans lequel le récepteur est en outre configuré de manière à recevoir un message de demande de service pour initier un service de communication pour le dispositif terminal ; et
dans lequel le processeur est en outre configuré de manière à générer le message de demande suite à la réception du message de demande de service.

10. Dispositif selon l'une quelconque des revendications 7 à 9, dans lequel l'émetteur est en outre configuré de manière à envoyer un message d'initiation de service au réseau de communication sélectionné pour initier le service de communication pour le dispositif terminal.
